Europäisches Patentamt

European Patent Office

Office européen des brevets

(19)

(11) Veröffentlichungsnummer: **0 247 098 B1**

# EUROPÄISCHE PATENTSCHRIFT

(12)

(45) Veröffentlichungstag der Patentschrift: **25.03.92**

(21) Anmeldenummer: **86906751.2**

(22) Anmeldetag: **01.12.86**

(86) Internationale Anmeldenummer:
**PCT/CH86/00166**

(87) Internationale Veröffentlichungsnummer:
**WO 87/03327 (04.06.87 87/12)**

(51) Int. Cl.5: **E06B 3/66**, E04B 1/80,
F24J 2/50, C03C 17/09

(54) **WÄRMEISOLIERENDES BAU- UND/ODER LICHTELEMENT.**

(30) Priorität: **29.11.85 CH 5091/85**
**16.04.86 CH 1558/86**
**18.09.86 CH 3737/86**

(43) Veröffentlichungstag der Anmeldung:
**02.12.87 Patentblatt 87/49**

(45) Bekanntmachung des Hinweises auf die
Patenterteilung:
**25.03.92 Patentblatt 92/13**

(84) Benannte Vertragsstaaten:
**AT BE CH DE FR GB IT LI LU NL SE**

(56) Entgegenhaltungen:

| | |
|---|---|
| EP-A- 0 047 725 | DE-A- 2 055 636 |
| DE-A- 2 317 612 | DE-A- 2 712 153 |
| DE-A- 2 755 013 | FR-A- 1 136 914 |
| FR-A- 2 300 860 | FR-A- 2 480 347 |
| FR-A- 2 483 564 | FR-A- 2 525 314 |
| US-A- 2 077 305 | US-A- 2 235 681 |
| US-A- 3 990 201 | US-A- 4 393 105 |
| US-A- 4 527 544 | |

**Silikattechnik, volume 32, No. 10, October**

1981, (Ost-Berlin, DD), W.GRAEFE:
"Plasmaspritzen auf Glas", pages 310-311

(73) Patentinhaber: **BÄCHLI, Emil**
**Marktgasse 7**
**CH-5304 Endingen(CH)**

(72) Erfinder: **BÄCHLI, Emil**
**Marktgasse 7**
**CH-5304 Endingen(CH)**

(74) Vertreter: **Fenner, Werner, Dipl.-Ing.**
**Patentanwalt Hofacher 374**
**CH-5425 Schneisingen(CH)**

EP 0 247 098 B1

## Beschreibung

Die Erfindung betrifft ein wärmeisolierendes Bau- und/oder Lichtelement gemäss dem Oberbegriff des Patentanspruches 1.

Seit Jahrzehnten hat sich an Gebäuden nach dem Vorfenster das doppelt und dreifach verglaste Fenster bewährt, welches im Verlauf der Zeit durch weitere Massnahmen, wie das Bedampfen mit einer Infrarot reflektierenden Schicht und Befüllen mit Edelgasen bezüglich Isolationswirkung auf einen k-Wert von 1,3 $W/m^2$ K verbessert werden konnte. Im Vergleich zu gut isolierten Gebäudeaussenwänden ist dieser Wert noch unbefriedigend.

Noch tiefere k-Werte (1,0 $W/m^2$ K) werden bei Isolierglasfenstern erzielt, welche zwischen die Glasscheiben gespannte, die Infrarotstrahlen reflektierend beschichtete, transparente Folien aufweisen. Die Folien bewirken, dass Konvektion, d.h. die Wärmeübertragung durch bewegte Luft stark behindert wird. Zur Vermeidung eines Glasbruches, muss der sich bei einer Erwärmung zwischen den Glasscheiben bildende hohe Drruck aus dem dichten Hohlraum der bis zu 100 mm dicken Fenster entweichen können. Ein zusätzlich vorgesehener Filter bewirkt, dass die eintretende neue Luft entfeuchtet wird, um ein Beschlagen der Glasscheiben im Hohlraum des Fensters auszuschliessen. Diese Konstruktion erlaubt einen günstigeren k-Wert, beeinträchtigt jedoch infolge der vielen Reflektionsschichten die Lichtdurchlässigkeit des Fensters. Zudem ist sie voluminös und aufwendig.

Durch vakuumisolierte Lichtelemente können noch weit bessere k-Werte erreicht werden, da bei zunehmendem Vakuum in einem Hohlraum die Konvektion der Luft und anschliessend die Wärmeleitung weitgehend aufgehoben werden. Daneben ist Glas einer der geeignetsten Werkstoffe, die ein Vakuum über Jahrzehnte aufrecht zu erhalten vermögen.

Vakuumisolierte Lichtelemente erzielen zudem im Winter eine positive Wärmebilanz, weil der austretende Wärmenergieverlust bei einem Fenster kleiner ist, als die durch das Licht eintretende Energie.

Der Vorteil eines evakuierten Lichtelementes besteht weiterdarin, dass sich auch Schall im Vakuum nicht fortpflanzen kann.

Ebenso vorteilhaft ist es, wenn sich in einem evakuierten Hohlraum kein Kondensat bilden kann. Zudem ist eine Infrarot reflektierende Schicht, beispielsweise eine Silberaufdampfung, im Vakuum gegen Oxidation unerreicht gut geschützt, wodurch ein Blindwerden weitgehend verhindert wird.

Es ist somit unbestrittene Tatsache, dass ein vakuumisoliertes Bau- und/oder Lichtelement in der Anwendung grosse Vorteile bringen würde. Dennoch haben diese vorhandenen Erkenntnisse nicht zu einem wirtschaftlichen Erfolg gereicht.

Auch bei einer nach der eingangs beschriebenen Art ausgebildeten Doppelverglasungseinheit eines Vakuumgehäuses gemäss der DE-A-2755013 tritt durch die Temperaturunterschiede der durch mehrere Abstandshalteeinrichtungen beabstandeten Glasscheiben eine Relativbewegung ein. Aus diesem Grunde weisen die Abstandshalteeinrichtungen jeweils an der Innenseite der Glasscheiben sich gegenüberliegende Lagerelemente auf, in die ein an beiden Enden kugelig ausgebildeter Abstandshalterzapfen eingreift, der die Relativbewegung der Glasscheiben in einer Richtung ermöglicht.

An den Rändern ist das Vakuumgehäuse mit einem zwischen den Glasscheiben und mit diesen an der Innenseite verbundenen Folienabdichtelement versehen.

Die Konstruktion der Abstandhalteeinrichtung zwingt zu einem relativ grossen Abstand zwischen den Glasscheiben, sodass ein hoher Energieaufwand zur Herstellung eines isolierend wirkenden Vakuums erforderlich ist oder umgekehrt, es kann bei einem geringen Vakuum kein genügender Isolationswert entstehen. Bedenken bestehen auch hinsichtlich des verwendeten Folienabdichtelementes, das aufgrund seiner Anordnungsweise und Ausbildung bei Anwendung eines Vakuums zwischen den Glasscheiben einem von aussen einwirkenden Druck nicht wird standhalten können; das Folienabdichtungselement wird von den Glasscheiben abgeschält.

Bei einem Wärmeisolierenden Fensterglas nach der EP-A-0047725 weisen die Glasscheiben einen niedrigen Schmelzpunkt auf, so dass die sich gegenüberliegenden, einen Zwischenraum bildenden Stützelemente, bei entsprechender Erwärmung aneinander verschmelzen. Zur dichten Abtrennung des evakuierten Zwischenraumes von der Umgebung sind die Kanten der Glasscheiben mit schmalen Glasstreifen verschmolzen. Die Glasscheiben sollen einen Abstand von 0,1 bis 0,3 mm und der dichte Zwischenraum ein niedrigeres Vakuum als 0,1 mbar resp. $10^{-1}$ mbar aufweisen. Hinsichtlich der Aufgabenstellung soll die Implosionsgefahr dahingehend gemindert werden, dass zwischen den Glasscheiben auf jedem $cm^2$ zwischen 30 und 100 Stützelemente vorgesehen sind. Diese Voraussetzungen gestatten keine befriedigende, auf eine physikalischen Grundlage sich stützende Isolationswirkung des hier offenbarten Fensters, schon deshalb, weil das anzuwendende Vakuum von wenigstens $10^{-1}$ mbar und der Abstand der Glasscheiben von 0,1 bis 0,3 mm auf Annahmen beruhen, die in keinen physikalischen Zusammenhang bringbar sind. Weiterhin ist das Ausmass der Verwendung von Stützelementen derart hoch gewählt, dass eine Wärmeübertragung zwischen den Glasscheiben stattfinden wird, die durch die Glas-Stütz-zelemente noch begünstigt wird.

Auch sind die starren Verbindungen der Glasscheiben an den Kanten des Fensters ungeeignet, um die dauernd auftretenden unterchiedlichen Flächenausdehnungen der Glasscheiben aufnehmen bzw. kompensieren zu können.

Weiterhin ist durch die deutsche Offenlegungsschrift 25'20'062 ein Bauelement mit hoher Isolierfähigkeit bekanntgeworden, bei dem wenigstens eine der beiden im Abstand angeordneten Begrenzungsflächen lichtdurchlässig oder durchsichtig ist und die Begrenzungsflächen durch Stützelemente gegeneinader abgestützt sind.

Im Rahmen der hier offenbarten Hinweise ist ein Baulement vorgeschlagen, dessen Begrenzungsflächen aufgrund der aufzustellenden zylindrischen bzw. aufzuklebenden kugelförmigen Stützelemente einen Abstand von mehreren Millimetern aufweisen. Der Vermerk, dass ein geringer Abstand zwischen den Begrenzungsfächen eine bessere Isolationswirkung ergibt, ist aufgrund der vermittelten Angaben unbegründet und beruht auf Annahmen, denen es an wirtschaftlichen Ueberlegungen und Erkenntnissen, wowie konstruktiven Ausführungsmerkmalen mangelt.

Ungelöst ist auch die sich bei einer solchen Lösung aufdrängende besondere Ausgestaltung der Verbindung an den Rändern des mit geringem Abstand zwischen den Begrenzungsflächen ausgebildeten Bauelementes. Unerkannt ist auch die Lösung, die zur Vermeidung der Erkennbarkeit der einzelnen Abstützelemente führt, wenn wie erwähnt, leichte Tüllvorhänge oder Regentropfen erheblich stärker und unregelmässiger wirken.

Gemäss dem Schlussbericht eines schweizerischen Forschungsprojektes Nr. 1093.1 wurden in den Jahren 1983 bis 1985 Versuche bei der Entwicklung eines "Evakuierten Doppelfensters mit extrem hoher Wämedämmung" durchgeführt. Die nach der DOS 25'20'062 und der amerikanischen Patentschrift 3'916'871 ausgeübten Experimente ergaben keine aufschlussreichen und befriedigenden Erkenntnisse sowohl über die Ausgestaltung wie auch die wirtschaftliche Herstellung eines evakuierten Doppelfensters.

Auch wenn die Dichtheit des Zwischenraumes hätte gelöst werden können, ist nach wie vor ein Fenster oder eine Glastüre mit den die freie Durch-sicht beeinträchtigenden Abstützelementen uner-wünscht und hat demnach zum vorzeitigen Ende des Forschungsprojektes geführt.

Bei der Wärmedämmung von Gebäuden bilden die Fenster bisheriger Konstruktionen die Archillessehne, die es zu beseitigen gibt. Durch die Vakuumtechnik müsste es an sich möglich sein, Fenster mit positiver Energiebilanz, d.h. mit k-Werten unter 0,5 W/m², herzustellen. Im Winter wäre dann die eintretende Lichtenergie grösser als der austretende Wärmeverlust, wodurch ein Vakuumfenster auch auf der Nordseite eines Hauses tagsüber eine Art Heizwand darstellen könnte, trotzdem sie von der Sonne nicht beschienen wird.

Bei gleichzeitiger Anwendung von vakuumisolierten Lichtelementen als Fenster und Fassadenelemente, könnte in vielen Fällen auf die konventionelle Gebäudeheizung verzichtet werden, da eine lichtdurchlässige Gebäudehaut genügend Lichtenergie in Form von Wärme in das Gebäudeinnere übertragen kann, also eine Art Wärmefalle darstellt.

Dabei dienen die Gebäudemauern während der Nacht als Wärmespeicher, bis dann am Morgen die Lichtheizung wieder aktiv wird.

Im Sommer entsteht durch die mit Beschat-tungsmitteln ausgestatteten, vakuumisolierten Fen-ster und Fassadenelemente ein kühleres Gebäude, auch mit hervorragenden Schalldämmungswerten, da sich Schall im Vakuum nicht fortpflanzen kann.

Es ist aber bis heute trotz grosser Anstrengungen nicht gelungen, eine zufriedenstellende Lösung zu finden.

Haupthindernis für eine Markteinführung bilden nach dem Stand der Technik die die Fensterdurchsicht stark störenden, rasterartig angeordneten Stützelemente, wie Kugeln oder stehende Bolzen, die von der Baupraxis abgelehnt werden. Zudem besteht eine permanente Unfallgefahr wegen Glasbruch durch Implosion evakuierter Fenster.

Ausserdem ist es bis anhin nicht gelungen, diese bekannten Kugeln oder Bolzen auf wirtschaftliche Weise in grosser Anzahl rasterartig auf einer Glasfläche genau zu positionieren.

Ein weiteres Hindernis für eine Realisierung bildete das angewendete Hochvakuum, um eine genügende Isolierwirkung erzielen zu können, welches jedoch wegen steter Ausdampfung der Glasoberflächen über längere Zeiträume nicht aufrecht zu erhalten ist.

Das Bauelement nach der deutschen Offenlegungsschrift 25'20'062 weist die Nachteile der optisch störenden Abstützelemente auf.

Dass auch in neuester Zeit noch keine Fortschritte erzielt werden konnten, vermittelt die Veröffentlichung einer Forschungsarbeit von SERI, Solar Energie Research Institute, Golden, Colorado USA in der Zeitschrift "In Rewiev" vom Januar 1985.

Diese Druckschrift zeigt zwei Glastafeln von 3 mm Dicke, zwischen denen kugelförmige Abstützungen mit einem die Durchsicht störenden Durchmesser von 4 mm rasterartig angeordnet sind. Das benötigte Hochvakuum von $1,3 \times 10^{-5}$ mbar birgt grosse Schwierigkeiten zu seiner Aufrechterhaltung über Jahrzehnte.

Auch besteht beim vorgesehenen Glasabstand eine Implosionsgefahr.

Aufgabe der Erfindung ist es somit, ein wärmeisolierendes Bau- und/oder Lichtelement der eingangs genannten Art zu schaffen, welches durch ein dauerhaftes Vakuum die Wärmeverluste weitestgehend verhindert und dessen hohes Isoliervermögen im Rahmen der industriellen Möglichkeiten unter wirtschaftlichen Bedingungen hergestellt werden kann sowie eine klare Transparenz gewährleistet.

Erfindungsgemäss wird diese Aufgabe nach den Merkmalen des kennzeichnenden Teils von Patentanspruch 1 gelöst.

Diese Definition bürgt für die Möglichkeit einer hohen Isolierfähigkeit eines Bau- und/oder Lichtelementes im Feinvakuumbereich und eine dauerhafte Aufrechterhaltung des Vakuums in dem durch die im Randbereich dicht miteinander verbundenen Wandelemente gebildeten Zwischenraum.

Die erheblich aufwendigere Herstellung im Hochvakuum lässt sich dadurch vermeiden, ohne dass die Isolierfähigkeit gemindert und die Möglichkeit der freien Durchsicht beeinträchtigt wird, ganz im Gegenteil.

Das im Hochvakuumbereich eintretende Ausdampfen der Wände des evakuierten Zwischenraumes wird im Feinvakuumbereich weitgehend eliminiert und dadurch das Vermögen zur Aufrechterhaltung des Vakuums beträchtlich gesteigert.

Der vorliegende Erfindungsgedanke stützt sich u.a. auf die physikalische Gegebenheit, wonach die Wärmeleitfähigkeit bei Gasen praktisch aufgehoben wird, wenn die freie Weglänge der vorhandenen Gasmoleküle grösser ist als der Abstnd zwischen kalter und warmer Wand eines evakuierten Raumes.

Die freie Weglänge der Gasmoleküle ist dem durch das Vakuum erzeugten Unterdruck proportional. Die Konsequenz aus dieser Gesetzmässigkeit ist, dass je kleiner der Wandabstand, entsprechen weniger zu evakuieren ist, um die Wärmeleitung im Gas zu reduzieren bzw. zu unterbinden. So beträgt beispielsweise die mittlere freie Weglänge der Luftmoleküle bei einem Vakuum von $10^{-1}$ mbar ca. 0,6 mm bzw. bei 1 mbar ca.0,06 mm. Dabei ist zu berücksichtigen, dass die Luftmoleküle in einem Vakuumraum nicht nur senkrecht von Wand zu Wand sich bewegen, sondern in allen Richtungen des Raumes.

Die praktische Anwendung dieser Regel führt zu einem möglichst geringen Abstand der Wandelemente, so dass eine technische Realisierung gerde noch möglich wird. Je nach Oberflächenbeschaffenheit wird der Abstand der Wandelemente bzw. Glasscheiben zwischen 0,05 und 0,5 mm liegen.

Selbstverständlich wird ein einen Abstand bis zu 1 mm aufweisender Zwischenraum vom vorliegenden Erfindungsgedanken als schlechtere Ausführung erfasst.

Aus dieser Erkenntnis entwickelt sich ein ungeahnter Vorteil, indem die Stützelemente zwischen Glasscheiben derart klein dimensionierbar sind, dass sie von blossem Auge auf weniger als einen Meter Distanz nicht oder nur sehr schlecht feststellbar sind.

Es errweist sich als besonders vorteilhaft, wenn die Stützelemente an wenigstens einem Wandelement befestigt sind, wodurch sich ihre Produktion und die Anbringung auf einfache Weise bewerkstelligen lassen.

Zweckmässig sind die Stützelemente als flache Scheibchen ausgebildet, wodurch sich ein geringer Abstand zwischen den Wandelementen des Zwischenraumes aus flachem Tafel- bzw. Bandmaterial oder zylindrischen bzw. prismatischen Werkstoffen fertigen lässt.

Vorteilhaft sind die Stützelemente im Sinne einer Begünstigung der ungestörten Durchsicht aus einem transparenten Werkstoff gebildet.

Vorzugsweise ist dieser Werkstoff weicher als die Wandelemente ausgebildet, um auf diese Weise wegen der sich durch Wärmedifferenzen verschiebenden Wandelemente eine Verletzung bzw. Beschädigung der Oberfläche der Wandelemente vermeiden zu können. Hier eignet sich Kunststoff, beispielsweise Polyester oder Teflon als besonders günstiger Werkstoff mit guten Gleiteigenschaften.

Die Distanz zwischen den Abstützungen wird vornehmlich durch die eigene und durch die Festigkeitseigenschaften der Wandelemente bestimmt und ist entsprechend auszunutzen. Während bei der Fensterglasscheibe nach der europäischen Patentschrift 0'047'725 Distanzen von ca. 1 cm und weniger zwischen den Stützelementen vorgesehen sind, überdecken hier im Interesse eines geringen Wärmetransfers die Stützelemente maximal 1 ‰ ( ein Promille ) der gesamten Fläche des evakuierten Bau- und/oder Lichtelementes. Die Versuche haben gezeigt, dass ein erheblich tieferer Wert möglich ist, beispielsweise 0,3 ‰ ( nullkommadrei Promille).

Zur Unterbindung der Infrarotstrahlung ist es vorteilhaft, wenn innerhalb des Zwischenraumes wenigstens eine die Infrarotstrahlen reflektierende Schicht aus Gold, Silber oder anderen sich eignenden Werkstoffen vorgesehen sind.

Aufgrund der sich ändernden Temperaturdifferenzen beidseits des Bau- und/oder Lichtelementes und der dadurch eintretenden gegenseitigen Verschiebungen der Wandelemente, ist es nützlich, wenn die Stützelemente mit einem Wandelement , z,B. durch Kleben, fest verbunden sind.

Besondere Bedeutung bei der Verwirklichung eines nach wirtschaftlichen Gesichtspunkten aufgebauten Bau- und/oder Lichtelementes kommt der zusammenhängenden technischen Funktionsfähigkeit der zu lösenden Teilaufgaben des sich zeigenden Problemkreises zu. Die Forderung nach einem technisch anspruchsloseren Vakuum in einem einen minimalen Abstand aufweisenden Zwischenraum und die daraus entstehenden gegenseitigen Verschiebungen der Wandteile in deren Erstreckungsrichtungen verlangen eine Kombination von Lösungsmerkmalen, die ganz offensichtlich auch bei den bekannten Entwicklungsversuchen nicht erkannt worden sind.

Des weiteren kann die Isolierwirkung durch ein weiteres oder mehrere aneinandergereihte Wandelemente verbessert werden, wobei vorteilhaft die Anordnungsweise der Stützelemente des einen Wandelementes gegenüber dem anderen zu versetzen ist, um so den Weg der Wärmeleitung weiter zu behindern. Ein aus drei Wandelementen gebildetes Bau- und/oder Lichtelement ermöglichte bei einem nach der Lehre dieser Erfindung ausgebildeten Prototyp einen noch nie erreichten k-Wert von 0,31 W/m² K.
Bauelemente ohne die Forderung nach Lichtdurchlässigkeit sind auch bei mehrschichtiger Bauweise in einer relativ dünnen Ausführung herzustellen.

Für eine dauerhafte Absorbtion von Restgasen oder Dämpfen, die zwar im vorgeschlagenen Vakuumbereich nur noch schwach auftreten, können Gettermittel, die mit dem Vakuumraum verbunden sind, angeordnet werden. Diese Gettermittel erhöhen die Zuverlässigkeit des Vakuums und können über die Funktionstauglichkeit des Bau- und/oder Lichtelementes mitbestimmend Einfluss nehmen. Gettermittel, die periodisch zu erwärmen sind, werden am Rand der durchsichtigen Glasscheiben der Sonnenbestrahlung ausgesetzt.

Die die gegenseitige Verschiebung der Wandlemente aufnehmende dichte Verbindung im Endbereich des Bau- und/oder Lichtelementes ist nachgiebig, elastisch und/oder flexibel ausgebildet, um die insbesondere bei flachen Zwischenräumen durch Wärmedifferenzen auftretenden unterschiedlichen Aenderungen in der Erstreckung der Wandelemente auffangen zu können. Die Abdichtung der Verbindung an den Wandelementen kann mittels Glasschweissung, Löten, Kleben oder Vulkanisieren eines gasdichten, auch gummiähnlichen Materials erfolgen. Die Abdichtung kann auch mehrstufig ausgebildet sein und bietet dadurch den Vorteil grösserer Sicherheit.

Als vorteilhaft dichte Verbindung der Wandelemente erweist sich eine dünnen Metallfolie, mit welcher das Bau und/oder Lichtelement am Rand U-förmig eingefasst wird.

Alternativ können die Ränder einer bandartigen Metallfolie an der Innenseite der Wandelemente, mit deren Rand dicht verbunden und mit dem über die Wandelemente hinausragenden Teil zu einem T-förmigen Querschnittsprofil an der Aussenkante des Bau- und/oder Lichtelementes anliegend gefaltet werden.
Als gasdichte Verbindung mit den Wandelementen kann Schmelzen, Löten oder Kleben angewendet werden. Unter der Metallfolie können Gettermittel eingelegt werden.

Damit dem Hohlraum für die Gettermittel eine höhere Beständigkeit gegenüber dem atmosphärischen Aussendruck vermittelt wird, kann in den Hohlraum ein zur Kante des Bau- und/oder Lichtelementes hin offenes C-Profil eingelegt werden. Damit lässt sich der Hohlraum zur Platzierung von Gettermittel nutzbar gestalten.

Die Gettermittel können auch ausserhalb des Bau- und/oder Lichtelementes, in einem mit dem evakuierten Zwischenraum kommunizierenden Behälter vorgesehen sein.

Als weitere Möglichkeit zur Abdichtung des Zwischenraumes können die Wandelemente an der Innenseite mit wenigstens annähernd parallel zu den Rändern verlaufenden Dichtungsnuten ausgebildet sein.

Die wirtschaftliche Herstellung des erfindungsgemässen Gegenstandes ist verhältnismässig einfach. Die transparenten oder nicht transparenten vakuumdichten Wände, z.B. Glastafeln, werden in der gewünschten Anzahl distanziert übereinander in eine verschliessbare Vakuumkammer gelegt. Bei den sich folgenden Tafeln werden vor dem Einlegen die Abstützkörper aufgelegt, die Randabdichtungen und die Gettermittel angebracht. Nach dem Schliessen der Vakuumkammer wird diese und somit auch die Zwischenräume zwischen den Tafeln evakuiert. Durch gleichzeitiges Erhitzen der Tafeln werden Wasser und absorbierte Gase aus den Tafeloberflächen und Dichtungen ausgetrieben und abgesugt, sodass diese später nur noch sehr minim ausgasen können.

Das Erhitzen dient auch dazu, im Falle von gelöteten Randabdichtungen das Lot zum Schmelzen zu bringen.

Sofern ein gummiartiges Dichtelement verwendet wird, kann dieses durch die Tafelerhitzung vulkanisiert oder geschmolzen werden, wobei die Temperatur dem jeweiligen Verfahren angepasst wird. Mit einer ausserhalb der heizbaren Vakuumkammer steuerbaren mechanischen Halte- und Senkvorrichtung werden die Tafeln gesenkt und angepresst, sodass die Abstützelemente und die Randdichtungen zum Tragen kommen. Damit werden gleichzeitig die Tafelränder dicht vulkanisiert oder zusammen mit einer flexiblen Metallfolie vakuumdicht verlötet. Dies ist besonders vorteilhaft, weil das Lot oder das Vulkanisiermaterial in der Vakuumkammer gleichzeitig entgast wird. Nach Abkühlung sind die Elemente fertig evakuiert und abgedichtet und können der Vakuumkammer gebrauchsfertig entnommen werden. Es wäre vorteilhaft, wenn die Infrarot reflektierende Schicht in der gleichen Vakuumkammer aufgedampft würde, sodass sich eine spezielle Vakuumaufdampfanlage erübrigt. Auf die beschriebene Weise unter Anwendung der Automation kann eine besonders wirtschaftliche, energiesparende Herstellung von vakuumisolierten Elementen erreicht werden, weil alle Arbeitsgänge an einem Ort zusammengelegt sind und ineinander ablaufen und sich ergänzen.

Die Erfindung ist anhand der in der Zeichnung dargestellten Ausführungsformen beispielsweise dargestellt und anschliessend erörtert. Es zeigen:

Fig. 1    eine Draufsicht auf das erfindungsgemässe Bau- und/oder Lichtelement,

Fig. 2    einen Querschnitt durch das Bau- und/oder Lichtelement,

Fig. 3    einen ausschnittweise vergrösserten Querschnitt durch ein Bau- und/oder Lichtelement,

Fig. 4    einen ausschnittweise vergrösserten Querschnitt durch ein Bau- und/oder Lichtelement,

Fig. 5    einen ausschnittweise vergrösserten Querschnitt durch ein Bau- und/oder Lichtelement,

Fig. 6    einen ausschnittweise vergrösserten Querschnitt  durch ein Bau- und/oder Lichtelement,

Fig 7    einen ausschnittweise vergrösserten Querschnitt durch ein Bau- und/oder Lichtelement,

Fig. 8    einen ausschnittweise vergrösserten Querschnitt durch ein Bau- und/oder Lichtelement,

Fig. 9    einen ausschnittweise vergrösserten Querschnitt durch ein Bau- und/oder Lichtelement,

Fig.10    einen Querschnitt durch ein Lichtelement zur Erwärmung von Gebäude-Aussenwänden,

Fig.11    einen ausschnittweise vergrösserten Querschnitt durch ein Bau- und/oder Lichtelement,

Fig.12    einen ausschnittweise vergrösserten Querschnitt durch ein Bau- und/oder Lichtelement,

Fig.13    einen ausschnittweise vergrösserten Querschnitt durch ein Bau- und/oder Lichtelement,

Fig.14    einen Querschnitt durch einen Dünnschicht-Vakuumkollektor,

Fig.15    einen Querschnitt durch einen Dünnschicht-Vakuumkollektor,

Fig.16    einen Querschnitt durch einen Wärmespeicher,

Fig.17    eine Stanzvorrichtung,

Fig.18    einen ausschnittweise vergrösserten Querschnitt durch ein Bau- und/oder Lichtelement,

Fig.19    einen ausschnittweise vergrösserten Querschnitt durch ein Bau- und/oder Lichtelement und

Fig.20    eine Draufsicht auf eine Randabdichtung an der Ecke eines Bau- und/oder Lichtelementes.

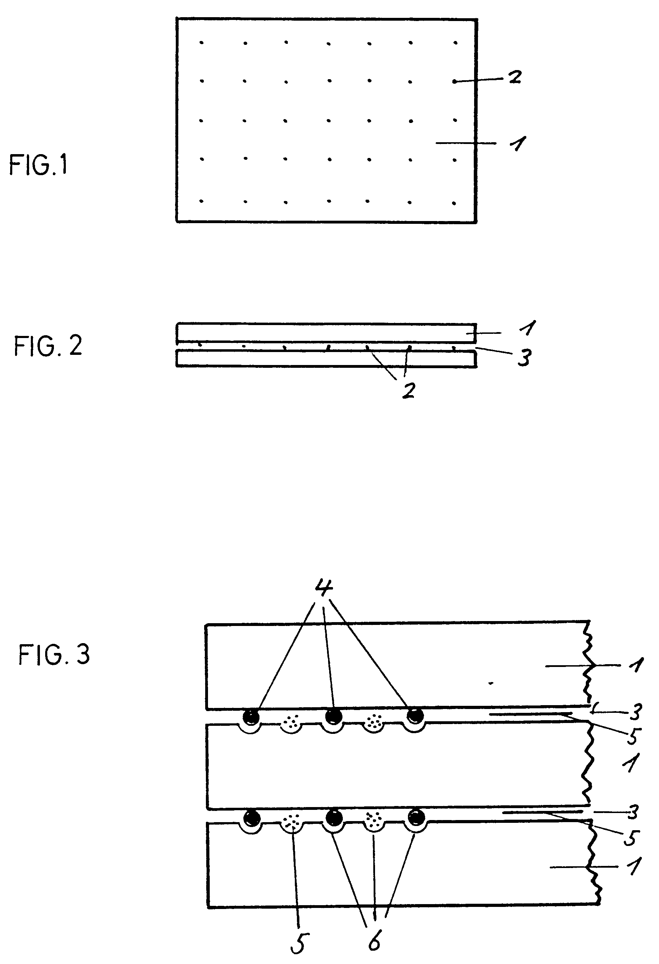

Fig. 1 zeigt ein Bau- und/oder Lichtelement mit der Anordnung der Stützelemente 2 zwischen bspw. zwei Wandelementen 1.

In Fig. 2 ist dieses Bau- und/oder Lichtelement mit dem Zwischenraum 3 im Querschnitt dargestellt.

Fig. 3 zeigt eine mehrstufige Randabdichtung aus einem elastischen, gummiähnlichen Material. Zwischen der in Nuten 6 liegenden Dichtung 4 sind zwischen den Wandelementen 1 Getter 5 vorgesehen. Die zwischen den Dichtungen 4 liegenden Kanäle sind evakuiert und gegenseitig abgedichtet, sodass das Versagen einer Dichtung 4 keinen spürbaren Einfluss auf die nächste Stufe ausübt.

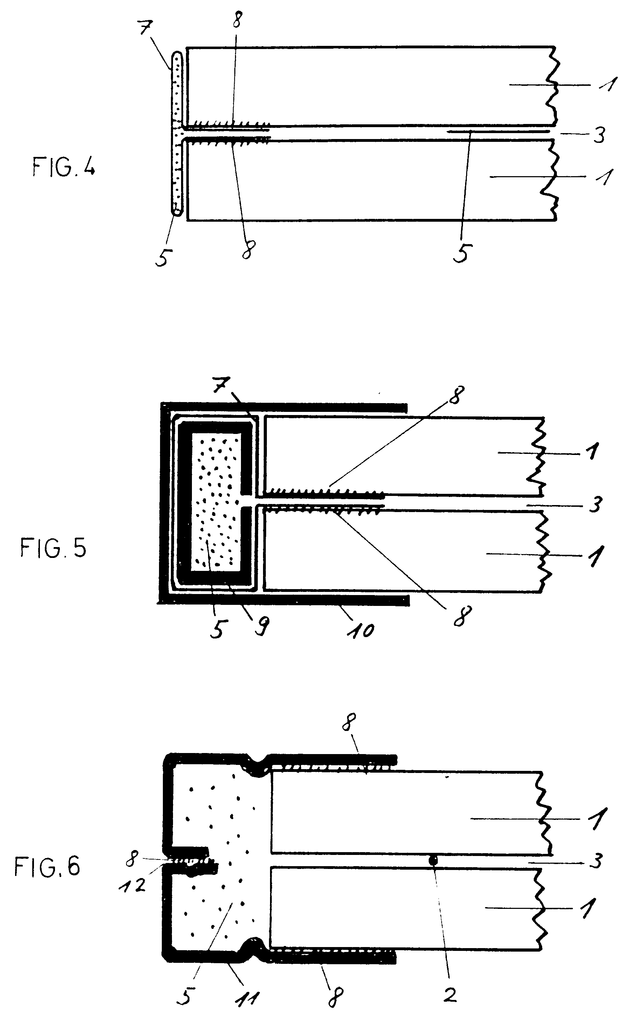

In Fig. 4 ist eine flexible Randabdichtung aus einer dünnen Metallfolie 7 dargestellt, die mit ihren Rändern an der Innenseite der Wandelemente 1 verlötet oder verklebt ist und deren verbleibender Teil gefaltet über die Kante des Bau- und/oder Lichtelementes hinausragend anliegt. Gettermittel, welche durch die Lichteinstrahlung erwärmt werden, können in Form eines dünnen Belages oder Bandes im evakuierten Zwischenraum 3 angeordnet werden.

Fig. 5 veranschaulicht eine felxible Randabdichtung wie in Fig. 4 mit dem Unterschied eines zur Aufnahme der Gettermittel vorgesehenen grösseren Raumes. Dies wird durch Einlegen eines druckfesten C-Profils 9, welches von der T-förmigen Metallfolie umschlossen ist, erreicht. U-Profil 10 dient als mechanischer Schutz.

Fig. 6 stellt eine flexible Randabdichtung aus einem zweiteiligen Metallprofil 11 dar. Die Schenkel sind mit den Wandelementen 1 vakuumdicht verklebt oder verlötet, ebenso die Trennstelle 12 des zweiteiligen Metallprofils. Diese Anwendung ist auch für die Ausführung nach den Fig. 3 und 4 möglich.

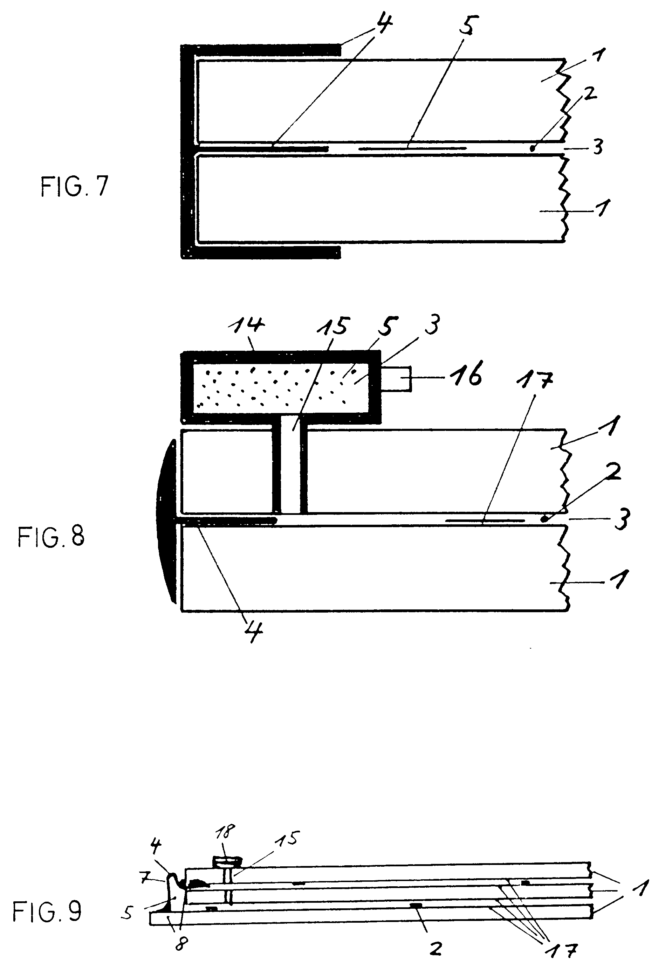

Fig. 7 veranschaulicht eine Randabdichtung aus einem die Wandelemente 1 umgebenden, aufvulkanisierten Material.

In Fig. 8 ist eine Randabdichtung gemäss den Fig. 3 und 7 mit einem vakuumdichten Vierkantrohr-Rahmen 14 dargestellt, welcher mittels einer Verbindung mit dem Zwischenraum 3 kommuniziert. Der Hohlraum des Rohres ist mit Gettermitteln versehen. An diesem Rohr-Rahmen kann ein Vakuumventil 16 angebracht werden. Zur Aufhebung der Infrarotstrahlung kann die dem Zwischenraum 3 zugekehrte Fläche der Wandelemente 1 mit einer Silber, Gold oder anderen, dem gleichen Zweck dienenden Aufdampfschicht versehen werden.

Im übrigen ist es möglich, die Gettermittel auswechselbar anzubringen, ohne dass während dem Auswechseln das Vakuum leidet.

Des weiteren können die vakuumisolierten Bau- und/oder Lichtelemente mit einem Ventil oder dgl. ausgestaltet sein, das erlaubt, nach sehr langer Zeit nachzuevakuieren, was aber kaum nötig sein wird, da Gettermittel allfällige Ausgasungen der Wandelemente 1 und der Dichtungen dauernd absorbieren.

Dieses Problem tritt vornehmlich im Hochvakuumbereich ein, ist jedoch im vorliegenden Fall weitgehend entschärft.

Fig. 9 stellt ein Lichtelement mit zwei aus drei Wandelementen 1 gebildeten evakuierten Zwischenräumen dar, wobei zwei der Wandelemente 1 gegenüber dem anderen Wandelement 1 mit ihrem Rand zurückstehen. Aufgrund der unterschiedlichen Temperaturen beidseits des Lichtelementes ist wegen der ungleichmässigen Flächenausdehnung eine flexible Randabdichtung vorgesehen. Besitzt das für die Randabdichtung verwendete Material einen anderen Ausdehnungskoeffizienten als jenes der Wandelemente, dann ist eine quer zur Ausdehnung gerichtete Schrumpfung bzw. Kompensation an der Randabdichtung zu berücksichtigen. Es erweist sich dafür eine geschrumpfte oder gewellte Edelstahlfolie als sehr zweckmässig.

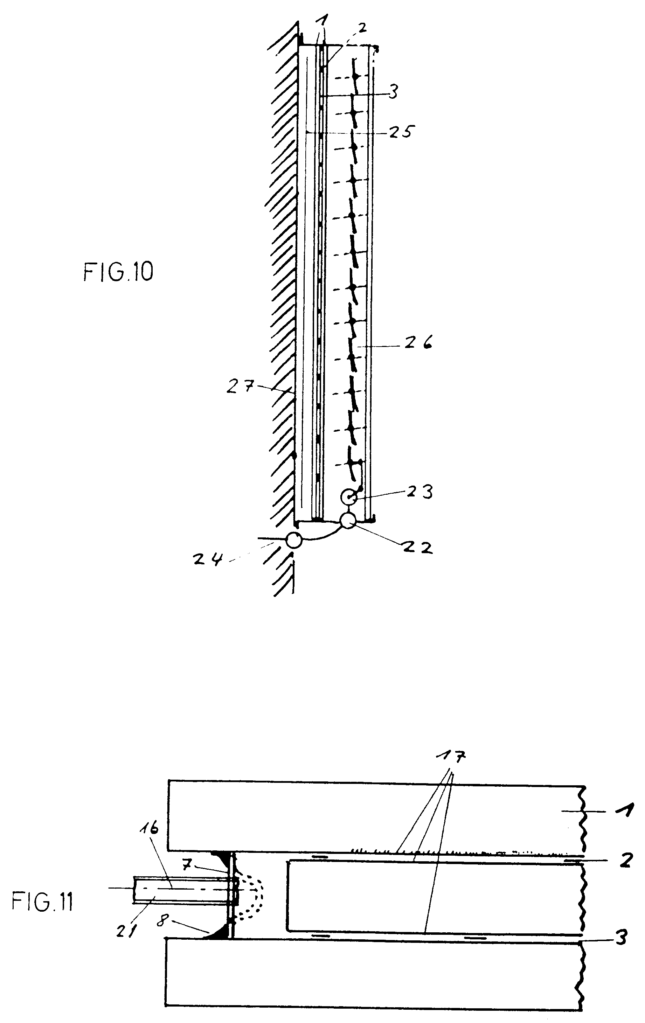

Fig. 10 veranschaulicht die Anwendung einer Beschattungseinrichtung 26 an der Aussenwand eines Gebäudes. Eine Beschattungseinrichtung verhindert eine zu starke Erwärmung der Wand 27. Der Antrieb der Beschattungseinrichtung 26 erfolgt über ein Bimetall durch einen Elektromotor, welcher von einer Sonnenzelle 22 gespiesen und über einen Thermostat 24 gesteuert wird.

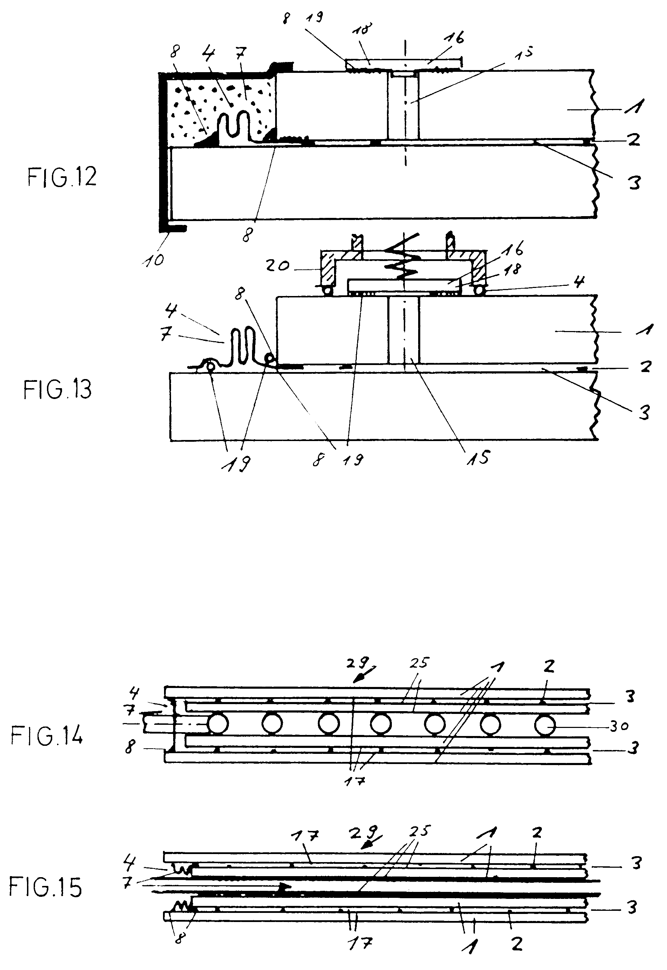

Fig. 11 zeigt ein Bau- und/oder Lichtelement mit einem mittleren, vom Rand der anderen Wandelemente 1 nach innen zurückversetzten Wandelement 1. Im dadurch entstehenden Hohlraum ist eine mit den äusseren Wandelementen verlötete Foliendichtung 7 vorgesehen, sowie ein Evakuierungsrohr 21, welches mittels Ventil 16 oder durch Abquetschen verschlossen werden kann.

Fig. 12 vermittelt ein Bau- und/oder Lichtelement mit einem vom Rande zurückversetzten Wandelement 1. Die gefaltete Metallfoliendichtung 7 ist zusätzlich geschützt durch ein Kantenschutzprofil 10, welches ausgeschäumt sein kann. Durch Abdichtung des Kantenprofils kann der Hohlraum als Vorvakuumkammer dienen. Durch die Oeffnung kann evakuiert und anschliessend der Deckel 18 mittels schmelzendem Lot 19 verschlossen werden.

Fig. 13 zeigt ein Bau- und/oder Lichtelement nach Fig. 12, jedoch mit wegnehmbarem Rohr 20, durch welches evakuiert werden kann. Die mit der gefalteten und quergeschrumpften Metallfoliendichtung parallelverlaufenden zwei Lötdrähte 19 ergeben beim Schmelzen eine dichte Lötverbindung zwischen Glas und Metallfolie 7.

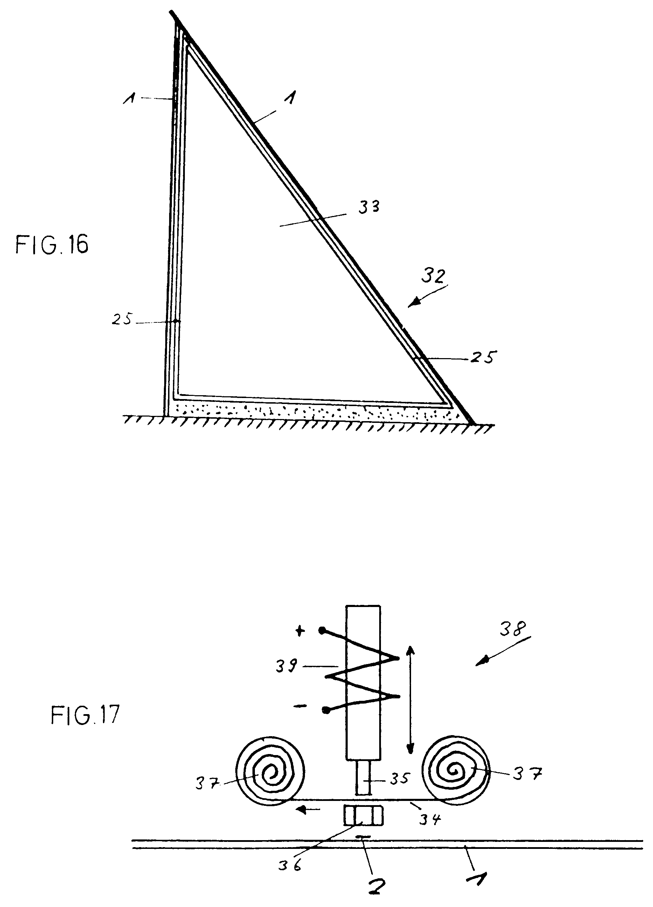

Fig. 14 stellt einen Dünnschicht-Vakuumkollektor dar, jedoch mit vier Wandelementen 1 und einer verlöteten Metallfoliendichtung 7. Das Wandelement 1 auf der Lichteinstrahlungsseite ist transparent. Das innere Wandelement 1, das auf die Rohrschlange drückt, ist selektiv beschichtet. Das tranparente Wandelement 1 auf der Einstrahlungsinnenseite sowie die rückseitigen Wandelemente können vakuumseitig infrarotreflektierend beschichtet sein.

Fig. 15 veranschaulicht einen Dünnschicht-Vakuumkollektor, bestehend aus einem Absorber 30, der nicht im Vakuumraum angeordnet, jedoch beidseitig durch je ein vakuumisoliertes Bau- und/oder Lichtelement wärmedämmend geschützt ist. Das rückseitige Element muss nicht transparent sein.

Fig. 16 zeigt einen Saisonwärmespeicher 32. Die selektive Schicht an der Behälteraussenwand 33 dient der Aufnahme der Lichteinstrahlung. Der ganze Behälter ist aussenseitig mit vakuumisolierten Bau- und/oder Lichtelementen bekleidet. Durch die schräg angelegte Seite kann im Winter der Schnee abrutschen.

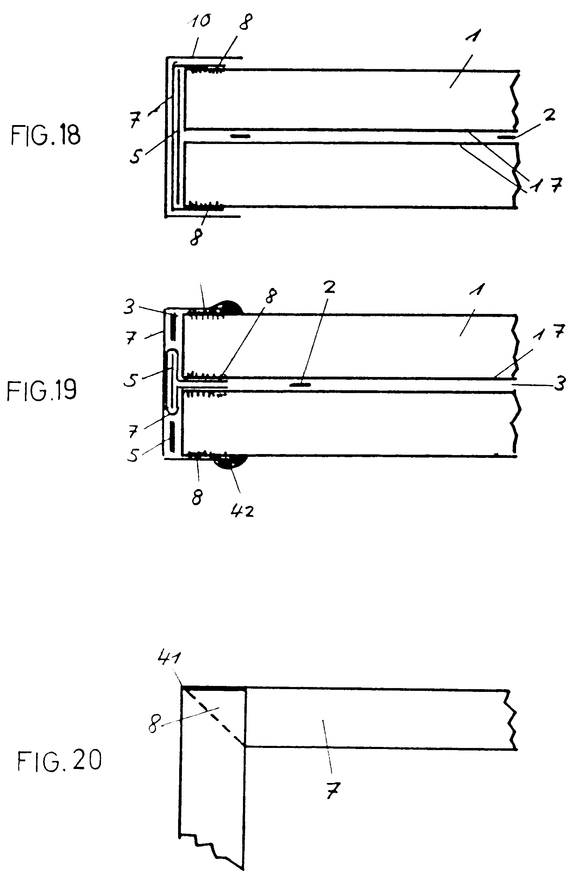

In Fig. 18 ist eine weitere Alternative eines Bau- und/oder Lichtelementes aus zwei Wandelementen 1 dargestellt, die von einer als Randabdichtung ausgebildeten Metallfolie 7 U-förmig eingefasst und mit den Aussenflächen der Wandelemente 1 verlötet sind. Unter der Metallfolie 7 ist ein Getterband 5 vorgesehen und ein Schutzüberzug 10 deckt die gesamte Abdichtung.

Fig. 19 zeigt ein Bau- und/oder Lichtelement wie in Fig. 18 dargestellt, mit dem Unterschied der Verwendung einer zweistufigen Metallfolienabdichtung 7.

Innerhalb der gegenseitig abgedichteten Vakuumstufen sind Getter 5 vorgesehen.

Eine allfällige Restleckrate durch die Grenzschicht aus Kupfer und Glas in der Vorvakuumstufe, kann durch eine Versiegelung 42 weitgehend vermieden werden.

Eine in den Ecken gefaltete Metallfoliendichtung 7, bei der die Faltung verlötet ist, ist in Fig. 20 veranschaulicht.

Bei der Fabrikation des erfindungsgemässen Bau- und/oder Lichtelementes kommt der Herstellung und dem Einlegen der Stützelemente 2 eine grosse Bedeutung zu.

Der vorliegende Erfindungsgedanke schlägt vor, dass die Stützelemente 2 über ihrer Endposition auf dem einen Wandelement 1 mittels einer Stanzvorrichtung 38 aus einem folienartigen Material ausgestanzt aufgelegt werden.

So haben u.a. Versuche gezeigt, dass mikrodünne transparente Scheibchen zwischen den Wandelementen 1 liegend in einer Grösse von ca. 1 mm Durchmesser kaum noch erkennbar sind.

Ein einfaches, sehr kostengünstiges Verfahren besteht im Stanzen kleiner Scheibchen aus einer Folie 34 senkrecht über den Endpositionen auf einer waagrechten Glasfläche, wo die Stützelemente 2 platziert sein müssen.

Zu diesem Zweck wird vorteilhaft ein Folienband 34 zwischen einem mechanisch- oder elektromagnetisch betätigten Stempel 35 und einer Matrize 36 taktweise vorgeschoben und gestanzt, sodass der Stanzling senkrecht in die richtige Lage fällt oder vom Stempel 35 dorthin gedrückt wird. Die Stanzeinrichtung 38 besitzt vorteilhaft eine Abroll- und Aufrollvorrichtung 37 für das Folienband 34, ähnlich dem Farbband bei einer Schreibmaschine, (siehe Fig. 17).

Da die Stützelemente 2 rasterartig in regelmässigen Abständen auf einer Glasscheibe platziert werden, wird eine oder mehrere der beschriebenen Stanzvorrichtungen 38 über der Glasfläche in die richtigen Positionen bewegt, oder es kann auch die Glasscheibe unter der feststehenden oder den feststehenden Stanzvorrichtungen 38 bewegt werden.

Eine besonders schnelle Aufbringung der Stützelemente 2 wird dadurch erreicht, indem die gleiche Anzahl Stanzvorrichtungen 38 über dem Wandelement 38 mit gleichem Rastermass angeordnet werden, soviel wie Stützelemente 2 auf das Glas aufzubringen sind.

Dadurch könnten bei grossen Fensterflächen pro Sekunde mehrere tausend Stützelemente über einer Glasfläche gestanzt und genau positioniert werden.

Für Stützelemente 2, die auf irgendwelche Art auf eine Glasfläche rasterartig aufgebracht werden, besteht die Möglichkeit, dass unter der Glasscheibe elektrostatisch aufladbare Nadeln oder Metallstifte vorgesehen sind, die die Stützelemente 2 richtig positionieren.

Aufliegende Scheiben haben gegenüber Kugeln oder Bolzen den Vorteil, dass sie nach der Aufbringung weder wegrollen noch umstürzen können.

Eine weitere rationelle Aufbringung von optisch nicht störenden Stützelementen 2 ermöglicht die Vakuumaufdampftechnik, indem mittels Masken, wie es bei der Herstellung von Mikro-Chips üblich ist, die Stützelemente 2 aufgedampft werden. Das aufzudampfende Substrat muss eine hohe Druckfestigkeit und eine geringe Wärmeleitfähigkeit aufweisen.

Sofern die Stützelemente 2 einen Durchmesser von weniger als 0,3 mm aufweisen, brauchen sie nicht transparent zu sein, da sie in dieser Grösse in einem Fenster nicht mehr sichtbar sind. Die Form der aufgedampften Stützelemente richtet sich nach einer wirtschaftlichen Herstellungsweise.

Ferner besteht die Möglichkeit, kleine nicht sichtbare Stützelemente mittels eines Druckverfahrens auf eine Glasfläche aufzutragen. Das pastenartige oder schmelzbare Stützelementematerial wird punktweise in vorbestimmter Rasteranordnung auf die Glasfläche gebracht oder auf eine andere geeignete Art aufgetragen, sodass nach Härtung der Paste druckfeste Stützelemente in Form von kleinen Erhöhungen auf der Glasoberfläche vorkommen.

Stützelemente 2 könnten auch auf eine Begrenzungsfläche gestreut werden, wobei die Aufstreuung auf verschiedene Arten erfolgen kann. Mit einer dünnen Platte, welche eine rasterartige Lochung aufweist und auf die Begrenzungsfläche aufgelegt wird, können die Stützelemente 2 positioniert werden.

Das Aufbringen von Stützelementen 2 kann auch mit einer gelochten Walze erfolgen, deren Löcher entsprechend dem gerasterten Abstand der Stützelemente auf dem Wandelement 1 entspricht, wobei die Stützelemente 2 beim Abrollen der Walze auf der begrenzten Fäche aus den Löchern der Walze herausfallen oder herausgepresst werden.

Es ist vorteilhaft, wenn das Stützelementematerial für alle Arten von Stützelementen oder die Stützelemente-Auflagefläche weniger hart ist als Glas, damit die Begrenzungsflächen durch den durch das Vakuum verursachten Anpressdruck nicht verletzt werden.

Das erforderliche Vakuum für den Zwischenraum liegt im nicht anspruchsvollen Feinvakuumbereich. Hochvakuum ist nicht notwendig.

Die Distanz der Stützelemente zueinander ist abhängig vom Querschnitt und der Druckfestigkeit des verwendeten Materials. Es muss durch Optimierung eine möglichst geringe Wärmeleitung angestrebt werden. Stützelementematerial aus Getterwerkstoff wäre ideal.

Je kleiner die Querschnitte und somit die Druckbelastbarkeit sind, umso geringer sind die Abstände zwischen den Stützelementen 2 zu wählen, wodurch eine Optimierung der Dicke der Wandelemente bzw. eine sich auf den Preis der Wandelemente günstig auswirkende Lösung ermöglicht wird.

Bei Verwendung von dünnem Tafelglas für ein vakuumisoliertes Bau- und/oder Lichtelement entsteht ein Verbundglas, das gegen Durchbiegung bei Winddruck bedeutend widerstandsfähiger ist als herkömmliches Isolierglas mit zwei oder drei Glasscheiben.

Dadurch, dass bei einem vakuumisolierten Lichtelement zwei, drei oder mehr Glastafeln mit einem Atmosphärendruck von 10 Tonnen pro $m^2$ auf die in der mikrodünnen Vakuumschicht liegend angeordneten Stützelemente 2 pressen, und diese einer seitlichen Verschiebung der Glastafeln einen Widerstand entgegensetzen, entsteht ein gewisser Glasverbund-.

Zwei, drei oder mehr Glastafeln erreichen so annähernd die Stärke eines Einzelglases in der Gesamtdicke der Summe der Einzelgläser.

Bei vakuumisolierten Lichtelementen gemäss dem Stand der Technik, mit bolzenartigen oder kugelförmigen Stützelementen-, entsteht dieser Verbundeffekt nicht, weil diese einer seitlichen Verschiebung der Glastafeln bei einerDurchbiegung keinen Widerstand entgegenzusetzen vermögen.

Nebst den verschiedensten Anwendungsarten von hochisolierenden Verglasungen und Kombinationen, eignet sich das vakuumisolierte Lichtelement auch für die Verkleidung und zur aktiven Isolierung von Gebäudefassaden als Licht-Heizelement.

Damit die direkte Sonnenstrahlung die Gebäudewände 27 hinter den Lichtelementen nicht zu stark erhitzen kann, wird dieses mit einer Beschattungseinrichtung 26 kombiniert, welche mit einem Thermostat 24 automatisch geregelt werden kann. Die Beschattungseinrichtung wird vorteilhaft im Hohlraum zwischen dem vakuumisolierten Lichtelement und einer parallel dazu angeordneten transparenten oder teiltransparenten Fassadenplatte 40, die auch verputzähnlich strukturiert sein kann, vorgesehen.
Zur Aufnahme der Lichtenergie kann eine selektive Schicht 25 angewendet werden.

Das vakuumisolierte Lichtelement mit mikrodünnem Zwischenraum 3 gestattet auch eine hocheffiziente aktive Sonnenenergienutzung durch Sonnenkollektor 29, indem zwischen zwei Glasscheiben eine der Sonne zugekehrte selektive Schicht 25 auf einem Absorber 30 angeordnet ist.

Die durch Sonnen- oder Lichtstrahlung im Absorber 30 erzeugte Wärme kann einem Speicher 32 oder Wärmeverbraucher zugeführt werden.
Zwischen dem Absorber 30 und der vorder- und rückseitigen Glasabdeckung befindet sich eine mikrodünne Vakuumschicht 3, mit dem Vorteil, dass bei einer eventuellen Implosion keine gefährlichen Glassplitter weggeschleudert werden können und kein Hochvakuum, sondern nur ein Feinvakuum erforderlich ist. Ein solcher Dünnschicht-Vakuumkollektor 29 kann auch als Fassadenelement mit oder ohne Beschattungseinrichtung 26 verwendet werden.

Der atmosphärische Aussendruck von 10 Tonnen pro $m^2$, welcher auf die Glasabdeckung und über die Stützelemente 2 auf den Absorber 30 drücken, kann dazu benutzt werden, eine sich zwischen zwei Absorberplatten befindliche Rohrschlange zusammenzupressen.
Der hohe Pressdruck ergibt eine gute wärmeleitende Verbindung zwischen Absorberplatten 30 und Rohrschlange, sodass eine Schweiss- oder Lötverbindung eingespart werden kann.

Ein vakuumisoliertes Lichtelement mit k-Wert von ca. 0,3 $W/m^2$, ermöglicht erstmals den Bau eines verlustlosen Saisonwärmespeichers 32. Dazu wird ein im Freien aufgestellter Behälter 33, aussen mit vakuumisolierten Lichtelementen versehen. Da die auf die Behälterwandungen 27 auftreffende Licht- und Sonnenstrahlung stärker ist als der austretende Wärmeverlust, kann das Speichermedium im Speicher 32 nicht abkühlen, d.h. es entstehen keine Stillstandsverluste. Dadurch gelingt es, Wärme auf hohem Temperaturniveau wirtschaftlich vom Sommer in den Winter zu speichern. Als Behälter 33 für Wasser dienen einfache Stahl-, Kunststoff- oder Betonbehälter. Die Behälteraussenwände sind zur Aufnahme der Lichtenergievorteilhaft mit einer selektiven Schicht 25 versehen. Ein solcher Speicher kann auch direkt unter dem Dach eines Hauses aufgestellt werden, wenn das Bedachungsmaterial im Bereiche des Speichers transparent ist oder aus vakuumisolierten Lichtelementen besteht.

Vakuumisolierte Bau- und/oder Lichtelemente nach der erfindungsgemässen Idee eignen sich auch als preisgünstige Dünnschichtisolationen für Kühlschränke, Gefriertruhen, Kühlräume etc., sowie überall dort, wo bei kleinstem Platzbedarf hohe Wärmedämmung erreicht werden soll.
Anstelle von Glastafeln können auch Metallplatten in beliebig vielen Schichten verwendet werden, sodass bei einer Dicke von ca. 10 mm k-Werte von weniger als 0,1 $W/m^2$ erreichbar sind. Ein noch besserer k-Wert wird erzielt bei durch Anordnung von infrarotreflektierenden Folien in den mikrodünnen Vakuumschichten 3.

Es ist vorteilhaft, die Randabdichtungen in einem dafür gebauten Vakuumofen mit den Glasflächen zu verlöten. Dazu werden die Glasränder und Randabdichtungen vorverzinnt.

Nachdem die Stützelemente 2 aufgebracht und die Randabdichtung auf die erste Glasscheibe aufgelegt worden ist, wird die zweite Glasscheibe darauf gelegt. Beide Scheiben sind durch eine Halteeinrichtung oder durch ein Lot voneinander distanziert. Nach dem Schliessen des Vakuumofens kann die Evakuierung und das Ausheizen des Ofens beginnen.

Gleichzeitig wird auch die Luft und Feuchtigkeit zwischen den Glasscheiben abgesogen. Nach einer bestimmten Zeit wird die Temperatur im Vakuumofen erhöht, sodass die Randabdichtung 7 mit den Loten 19 schmilzt. Dadurch sinkt die obere Scheibe durch ihr Gewicht auf die Randabdichtung 7 mit dem flüssigen Lot 19 ab und es entsteht eine gasdichte Verbindung. Nach Abbruch des Heizvorganges erkaltet das Lot 19, sodass das fertig evakuierte Lichtelement dem Ofen entnommen werden kann. Sollte das Eigengewicht der oberen Scheibe als Belastung nicht ausreichen, so kann mit zusätzlichem Druck nachgeholfen werden. Anstelle eines Stützlotes 19, welches beim Schmelzen die obere Scheibe auf die Randabdichtung und die Stützelemente 2 sinken lässt, kann auch eine mechanische Absenkvorrichtung angewendet werden.

Die Evakuierung eines Lichtelementes kann aber auch mittels eines durch die Randabdichtung geführten Rohres 21 erfolgen, welches danach abgequetscht und dicht verlötet wird.

Es kann auch eine durch die Glasscheibe oder die Randabdichtung führende Oeffnung 15 evakuiert werden. Zu diesem Zweck wird ein Rohr 20 dichtend auf die Glasscheibe oder die Randabdichtung gepresst und durch dieses Rohr 20 wird die Luft abgesaugt. Innerhalb des Rohres 20 über der Oeffnung 15 befindet sich ein Verschlussdeckel 18. Während des Evakuierens ist dieser etwas angehoben, also nicht dicht aufgebracht. Nach beendeter Evakuation wird der Deckel 18 abgesenkt und gasdicht verschlossen. Dies erfolgt durch ein zwischen Glasscheibe bzw. Randabdichtung und Deckel schmelzendes Lot 19, welches durch eine Wärmequelle erhitzt wird. Auf diese Weise kann direkt im Vakuumofen evakuiert werden, auch wenn die Randabdichtungen bereits dichtend angebracht sind.

Nachdem das erforderliche Vakuum erreicht ist, wird das zwischen Verschlussdeckel 18 und Randabdichtung 7 oder der Glasfläche liegende Lot 19 mittels einer Wärmequelle zum Schmelzen gebracht, sodass eine gasdichte Lötverbindung 8 entsteht.

**Patentansprüche**

1. Wärmeisolierendes Bau- und/oder Lichtelement, bestehend aus wenigstens zwei, zumindest annähernd parallel verlaufenden Wandelementen, die durch dazwischen angeordnete Stützelemente in einem gegenseitigen Abstand gehalten und zur Bildung eines die Wärmeleitung herabsetzenden evakuierten Zwischenraumes in ihrem Randbereich mittels einer eine gegenseitige Verschiebung der Wandelemente aufnehmenden Verbindung dicht miteinander verbunden sind, dadurch gekennzeichnet, dass der Abstand der Wandelemente (1) kleiner ist als die zur Aufhebung der Wärmeleitung erforderliche freie Weglänge der Gasmoleküle im Feinvakuumbereich zwischen 1 und $10^{-3}$ mbar, und dass die Verbindung eine am Rand der Wandelemente (1) befestigte Dichtung ist, die aus einer verformbaren bandartigen Metallfolie besteht.

2. Bau- und/oder Lichtelement nach Anspruch 1, dadurch gekennzeichnet, dass der Abstand zwischen den Wandelementen (1) des Zwischenraumes (3) maximal 0,5 mm beträgt.

3. Bau- und/oder Lichtelement nach Anspruch 1, dadurch gekennzeichnet, dass die Stützelemente (2) an wenigstens einem Wandelement (1) befestigt sind.

4. Bau- und/oder Lichtelement nach Anspruch 3, dadurch gekennzeichnet, dass die Höhe der Stützelemente (2) kleiner ist als dick.

5. Bau- und/oder Lichtelement nach Anspruch 4, dadurch gekennzeichnet, dass die Stützelemente (2) als flache Scheibchen ausgebildet sind.

6. Bau- und/oder Lichtelement nach einem der Ansprüche 3 bis 5, dadurch gekennzeichnet, dass die Stützelemente (2) aus einem transparenten Werkstoff gebildet sind.

7. Bau- und/oder Lichtelement nach einem der Ansprüche 3 bis 6, dadurch gekennzeichnet, dass die Stützelemente (2) weicher als die Wandelemente (1) ausgebildet sind.

8. Bau- und/oder Lichtelement nach einem der Ansprüche 1 bis 7, dadurch gekennzeichnet, dass die Stützelemente (2) zwischen den Wandelementen (1) maximal 1‰ (ein Promille) der gesamten Fläche des Bau- und/oder Lichtelementes überdecken.

9. Bau- und/oder Lichtelement nach einem der Ansprüche 1 bis 8, dadurch gekennzeichnet, dass dieses innerhalb des evakuierten Zwischenraumes (3) mit wenigstens einer die Infrarotstrahlung reflektierenden Schicht versehen ist.

10. Bau- und/oder Lichtelement nach einem der Ansprüche 1 bis 9, dadurch gekennzeichnet, dass mit dem Vakuum verbundene Gettermittel (5) vorgesehen sind.

11. Bau- und/oder Lichtelement nach einem der Ansprüche 1 bis 10, dadurch gekennzeichnet, dass die Randdichtung mehrstufig ausgebildet ist und gegenseitig dichte, evakuierte Kanäle aufweist.

12. Bau- und/oder Lichtelement nach einem der Ansprüche 1 bis 11, dadurch gekennzeichnet, dass die Dichtung die Wandelemente (1) U-förmig umfasst.

13. Bau- und/oder Lichtelement nach einem der Ansprüche 1 bis 11, dadurch gekennzeichnet, dass die Dichtung jeweils seitlich mit den Innenseiten der Wandelemente (1) verbunden ist und mit einem über den Rand der Wandelemente (1) hinausragenden Zwischenteil ein gefaltetes, an der Kante des Bau- und/oder Lichtelementes anliegendes T-förmiges Querschnittsprofil bildet.

14. Bau- und/oder Lichtelement nach einem der Ansprüche 1 bis 13, dadurch gekennzeichnet, dass die Wandelemente (1) an der Innenseite mit wenigstens annähernd parallel zu den Rändern verlaufenden Dichtungsnuten (6) ausgebildet sind.

15. Bau- und/oder Lichtelement nach einem der Ansprüche 1 bis 14, dadurch gekennzeichnet, dass wenigstens eines der Wandelemente (1) gegenüber dem/den anderen Wandelementen (1) mit einem zurückversetzten Rand ausgebildet ist.

16. Bau- und/oder Lichtelement nach einem der Ansprüche 1 bis 15, dadurch gekennzeichnet, dass die Randabdichtung durch eine quer zur Ausdehnung der Wandelemente (1) schrumpfbare oder gewellte Folie (7) ausgebildet ist, deren Ränder mit den Wandelementen (1) verbunden sind.

17. Bau- und/oder Lichtelement nach einem der Ansprüche 1 bis 16, dadurch gekennzeichnet, dass an seiner Aussenseite eine aus Tageslicht erzeugte Energie betriebene thermostatisch gesteuerte Beschattungseinrichtung (26) vorgesehen oder die Beschattung durch andere Mittel steuerbar ist.

18. Bau- und/oder Lichtelement nach einem der Ansprüche 1 bis 16, dadurch gekennzeichnet, dass dieses als Kollektor zur Gewinnung von Licht- und und Sonnenenergie vorgesehen ist, wobei das an der Aussenseite angeordnete Wandelement (1) transparent ausgebildet und im Zwischenraum (3) mit selektiv beschichteten Absorbern und flüssigkeitsführenden Leitungen versehen ist.

19. Bau- und/oder Lichtelement nach einem der Ansprüche 1 bis 16, dadurch gekennzeichnet, dass diese an der tageslichtbestrahlten Aussenseite eines Wärmespeichers (32) angeordnet ist und die Speicherwände mit schwarzer oder selektiver Beschichtung versehen sind.

20. Verfahren zur Herstellung eines wärmeisolierenden Bau- und/oder Lichtelementes nach einem der Ansprüche 1 bis 16, dadurch gekennzeichnet, dass die Wandelemente (1) jeweils paarweise oder mehrfach nach Einlegen der Stützelemente (1) und allfälliger Gettermittel sowie Auflegen der Randdichtung zur Bildung des Zwischenraumes (3) in einem Vorgang evakuiert, ausgeheizt und abgedichtet werden.

21. Verfahren zur Herstellung eines wärmeisolierenden Bau- und/oder Lichtelementes nach einem der Ansprüche 1 bis 16, bestehend aus wenigstens zwei, einen mit Stützelementen (2) versehenen, evakuierten Zwischenraum (3) bildenden Wandelementen (1), die durch eine Randabdichtung (4,7,8,13) verbunden sind, dadurch gekennzeichnet, dass die Stützelemente (2) über ihrer Endposition auf dem einen Wandelement (1) mittels Stanzvorrichtung (38) aus einem schrittweise zugeführten folien- oder tafelförmigen Material ausgestanzt und aufgelegt werden.

22. Vorrichtung zur Durchführung des Verfahrens nach Anspruch 20, dadurch gekennzeichnet, dass eine mit mehreren, auf das Rastermass der Stützelemente (2) abgestimmten Stationen ausgebildete Stanzvorrichtung (38) und eine Zuführvorrichtung für das zu stanzende Material vorgesehen ist.

23. Vorrichtung nach Anspruch 22, dadurch gekennzeichnet, dass unter dem die Stützelemente (2) aufnehmenden Wandelement (1) und der Stanzvorrichtung (38) elektrostatisch aufladbare Nadeln oder Stifte zur Positionierung der Stützelemente (2) vorgesehen sind.

24. Verfahren zur Herstellung eines wärmeisolierenden Bau- und/oder Lichtelementes nach einem der Ansprüche 1 bis 16, bestehend aus wenigsten zwei, einen mit Stützelementen (2) versehenen, evakuierten Zwischenraum (3) bildenden Wandelementen (1), die durch eine Randabdichtung (4,7,8,13) verbunden sind, dadurch gekennzeichnet, dass die Stützelemente (2) durch Aufdampfen auf das vorgesehene Wandelement (1) und nach einer mit den Endpositionen der Stützelemente (2) gerasterten, durchbrochenen Maske aufgedampft werden.

25. Verfahren zur Herstellung eines wärmeisolierenden Bau- und/oder Lichtelementes nach einem der Ansprüche 1 bis 16, bestehend aus wenigstens zwei, einen mit Stützelementen (2) versehenen, evakuierten Zwischenraum (3) bildenden Wandelementen (1), die durch eine Randabdichtung (4,7,8,13) verbunden sind, dadurch gekennzeichnet, dass die Stützelemente (2) als härtende Paste oder schmelzendes Material aufgetragen werden.

26. Verfahren zur Herstellung eines wärmeisolierenden Bau- und/oder Lichtelementes nach einem der Ansprüche 1 bis 16, bestehend aus wenigstens zwei, einen mit Stützelementen (2) versehenen, evakuierten Zwischenraum (3) bildenden Wandelementen (1), die durch eine Randabdichtung (4,7,8,13) verbunden sind, dadurch gekennzeichnet, dass die Stützelemente (2) durch Ausstreuen auf dem Wandelement (1) angeordnet werden.

27. Verfahren zur Herstellung eines wärmeisolierenden Bau- und/oder Lichtelementes nach einem der Ansprüche 1 bis 16, bestehend aus wenigstens zwei, einen mit Stützelementen (2) versehenen, evakuierten Zwischenraum (3) bildenden Wandelementen (1), die durch eine Randabdichtung (4,7,8,13) verbunden sind, dadurch gekennzeichnet, dass die Stützelemente (2) aus einer nach dem vorbestimmten Rastermass mit Oeffnungen am Mantelumfang versehenen, abrollenden Walze auf ein Wandelement (1) aufgetragen werden.

28. Verfahren zur Herstellung eines wärmeisolierenden Bau- und/oder Lichtelementes nach einem der Ansprüche 20 und 24 bis 27, bestehend aus wenigstens zwei, einen mit Stützelementen (2) versehenen, evakuierten Zwischenraum (3) bildenden Wandelementen (1), die durch eine Randabdichtung (4,7,8,13) verbunden sind, dadurch gekennzeichnet, dass die Evakuierung des Zwischenraumes (3) durch eine Oeffnung in der Randabdichtung, den Wandelementen (1) oder dem Gettermittelbehälter und diese Oeffnung unter Vakuum verlötet und die Lötstelle erst nach Aushärtung des Lotes mit der atmosphärischen Umgebung in Verbindung gebracht wird.

29. Bau- und/oder Lichtelement nach einem der Ansprüche 1 bis 16, dadurch gekennzeichnet, dass die Wandelemente (1) aus Glas gebildet sind.

**Claims**

1. Heat-insulating construction and/or lighting element, consisting of at least two at least approximately parallel wall elements which are held mutually spaced by supporting elements arranged therebetween and, in order to form an evacuated interspace reducing heat conduction, are connected together in a sealed manner in their edge region by means of a joint absorbing mutual displacement of the wall elements, characterised in that the spacing of the wall elements (1) is smaller than the free path length of the gas molecules in the fine vacuum range between 1 and $10^{-3}$ mbar required to eliminate heat conduction, and that the joint is a seal secured to the edge of the wall elements (1) and consisting of a deformable ribbon-like metal foil.

2. Construction and/or lighting element according to claim 1, characterised in that the spacing between the wall elements (1) of the interspace (3) is a maximum of 0.5 mm.

3. Construction and/or lighting element according to claim 1, characterised in that the supporting elements (2) are secured to at least one wall element (1).

4. Construction and/or lighting element according to claim 3, characterised in that the height of the supporting elements (2) is smaller than their thickness.

5. Construction and/or lighting element according to claim 4, characterised in that the supporting elements (2) are flat discs.

6. Construction and/or lighting element according to one of claims 3 to 5, characterised in that the supporting elements (2) are made of a transparent material.

7. Construction and/or lighting element according to one of claims 3 to 6, characterised in that the supporting elements (2) are softer than the wall elements (1).

8. Construction and/or lighting element according to one of claims 1 to 7, characterised in that the supporting elements (2) between the wall elements (1) cover a maximum of 1 %o (one per mil) of the total surface of the construction and/or lighting element.

9. Construction and/or lighting element according to one of claims 1 to 8, characterised in that the said element is provided with at least an infrared radiation reflecting layer within the evacuated interspace (3).

10. Construction and/or lighting element according to one of claims 1 to 9, characterised in that getter means (5) connected to the vacuum are provided.

11. Construction and/or lighting element according to one of claims 1 to 10, characterised in that the edge seal is formed in several stages and has mutually sealed evacuated ducts.

12. Construction and/or lighting element according to one of claims 1 to 11, characterised in that the seal surrounds the wall elements (1) in a U-shaped manner.

13. Construction and/or lighting element according to one of claims 1 to 11, characterised in that the seal is connected at either side to the inner faces of the wall elements (1) and, together with an intermediate portion projecting over the edge of the wall elements (1), is folded to form a T-shaped cross-sectional profile adjacent to the edge of the construction and/or lighting element.

14. Construction and/or lighting element according to one of claims 1 to 13, characterised in that the wall elements (1) are provided on their inner faces with sealing grooves (6) extending at least approximately parallel to the edges.

15. Construction and/or lighting element according to one of claims 1 to 14, characterised in that at least one of the wall elements (1) is formed with an edge set back with respect to the other wall element(s) (1).

16. Construction and/or lighting element according to one of claims 1 to 15, characterised in that the edge seal is formed by a shrink or corrugated foil (7) transverse to the extension of the wall elements (1), the edges of which are connected to the wall elements (1).

17. Construction and/or lighting element according to one of claims 1 to 16, characterised in that a thermostatically controlled shading device (26) operated by energy produced by daylight is provided on its outer face, or shading can be controlled by other means.

18. Construction and/or lighting element according to one of claims 1 to 16, characterised in that the said element is provided as a collector for obtaining light and solar energy, the wall element (1) arranged on the outer face being transparent and being provided in the interspace (3) with selectively coated absorbers and liquid-carrying lines.

19. Construction and/or lighting element according to one of claims 1 to 16, characterised in that the said element is arranged on the outer face of a heat accumulator (32) exposed to daylight and the accumulator walls are provided with a black or selective coating.

20. Process for the production of a heat-insulating construction and/or lighting element according to one of claims 1 to 16, characterised in that after the insertion of the supporting elements (2) and possibly getter means and the application of the edge seal to form the interspace (3), the wall elements (1), in pairs or in multiples, are evacuated, heated and sealed in one step.

21. Process for the production of a heat-insulating construction and/or lighting element according to one of claims 1 to 16, consisting of at least two wall elements (1) forming an evacuated interspace (3) provided with supporting elements (2), the said wall elements being connected by an edge seal (4, 7, 8, 13), characterised in that the supporting elements (2) are punched out by means of a punching tool (38) from a foil- or slab-like material supplied in a stepwise manner and are applied over their final position on the one wall element (1).

22. Device for carrying out the process according to claim 20, characterised in that a punching tool (38) having several stations adapted to the modular dimension of the supporting elements (2) and a supply device for the material to be punched are provided.

23. Device according to claim 22, characterised in that electrostatically chargeable needles or pins are provided below the wall element (1) receiving the supporting elements (2) for positioning the supporting elements (2).

24. Process for the production of a heat-insulating construction and/or lighting element according to one of claims 1 to 16, consisting of at least two wall elements (1) forming an evacuated interspace (3) provided with supporting elements (2), the said wall elements being connected by an edge seal (4, 7, 8, 13), characterised in that the supporting elements (2) are vacuum deposited on the wall element (1) provided according to a perforated mask adapted to the final positions of the supporting elements (2).

25. Process for the production of a heat-insulating construction and/or lighting element according to one of claims 1 to 16, consisting of at least two wall elements (1) forming an evacuated interspace (3) provided with supporting elements (2), the said wall elements being connected by an edge seal (4, 7, 8, 13), characterised in that the supporting elements (2) are applied as a hardening paste or fusible material.

26. Process for the production of a heat-insulating construction and/or lighting element according to one of claims 1 to 16, consisting of at least two wall elements (1) forming an evacuated interspace (3) provided with supporting elements (2), the said wall elements being connected by an edge seal (4, 7, 8, 13), characterised in that the supporting elements (2) are arranged by scattering on the wall element (1).

27. Process for the production of a heat-insulating construction and/or lighting element according to one of claims 1 to 16, consisting of at least two wall elements (1) forming an evacuated interspace (3) provided with supporting elements (2), the said wall elements being connected by an edge seal (4, 7, 8, 13), characterised in that the supporting elements (2) are applied to a wall element (1) from a rolling cylinder provided on its circumferential surface with openings according to the predetermined modular dimension.

28. Process for the production of a heat-insulating construction and/or lighting element according to one of claims 20 and 24 to 27, consisting of at least two wall elements (1) forming an evacuated interspace (3) provided with supporting elements (2), the said wall elements being connected by an edge seal (4, 7, 8, 13), characterised in that the evacuation of the interspace (3) is effected through an opening in the edge seal, the wall elements (1) or the getter means container and this opening is soldered under vacuum, the soldering joint only being brought into communication with the surrounding atmosphere once the solder has hardened.

29. Construction and/or lighting element according to one of claims 1 to 16, characterised in that wall elements (1) are made of glass.

**Revendications**

1. Elément thermo-isolant de construction et/ou d'éclairage, comprenant au moins deux éléments de paroi s'étendant au moins à peu près parallèlement, qui sont maintenus à distance réciproque par l'intermédiaire d'éléments de soutien intercalaires, et sont reliés hermétiquement l'un à l'autre dans leur région marginale, au moyen d'une solidarisation compensant un décalage mutuel des éléments de paroi, en vue de former un espace intermédiaire mis sous vide et réduisant la conduction thermique, caractérisé par le fait que la distance entre les éléments de paroi (1) est plus petite que la longueur de parcours libre des molécules gazeuses dans la plage de vide poussé comprise entre 1 et $10^{-3}$ mbar, nécessaire à la suppression de la conduction thermique ; et par le fait que la solidarisation est une garniture d'étanchement fixée au bord des éléments de paroi (1), qui consiste en une feuille métallique déformable du type ruban.

2. Elément de construction et/ou d'éclairage selon la revendication 1, caractérisé par le fait que la distance entre les éléments de paroi (1) de l'espace intermédiaire (3) mesure 0,5 mm au maximum.

3. Elément de construction et/ou d'éclairage selon la revendication 1, caractérisé par le fait que les éléments de soutien (2) sont fixés à au moins un élément de paroi (1).

4. Elément de construction et/ou d'éclairage selon la revendication 3, caractérisé par le fait que la hauteur des éléments de soutien (2) est davantage petite qu'épaisse.

5. Elément de construction et/ou d'éclairage selon la revendication 4, caractérisé par le fait que les éléments de soutien (2) sont réalisés sous la forme de petits disques aplatis.

6. Elément de construction et/ou d'éclairage selon l'une des revendications 3 à 5, caractérisé par le fait que les éléments de soutien (2) sont constitués d'un matériau transparent.

7. Elément de construction et/ou d'éclairage selon l'une des revendications 3 à 6, caractérisé par le fait que les éléments de soutien (2) sont réalisés plus tendres que les éléments de paroi (1).

8. Elément de construction et/ou d'éclairage selon l'une des revendications 1 à 7, caractérisé par le fait que les éléments de soutien (2) entre les éléments de paroi (1) recouvrent, au maximum, 1 ‰ (un pour mille) de la a superficie totale de l'élément de construction et/ou d'éclairage.

9. Elément de construction et/ou d'éclairage selon l'une des revendications 1 à 8, caractérisé par le fait que ce dernier est pourvu, à l'intérieur de l'espace intermédiaire (3) mis sous vide, d'au moins une couche réfléchissant le rayonnement infrarouge.

10. Elément de construction et/ou d'éclairage selon l'une des revendications 1 à 9, caractérisé par la présence d'agents sorbeurs (5) raccordés à la dépression.

11. Elément de construction et/ou d'éclairage selon l'une des revendications 1 à 10, caractérisé par le fait que la garniture d'étanchement marginale est réalisée en plusieurs gradins et présente des canaux mutuellement étanches, soumis à dépression.

12. Elément de construction et/ou d'éclairage selon l'une des revendications 1 à 11, caractérisé par le fait que la garniture d'étanchement entoure les éléments de paroi (1) en formant un U.

13. Elément de construction et/ou d'éclairage selon l'une des revendications 1 à 11, caractérisé par le fait que la garniture d'étanchement est respectivement reliée dans le sens latéral aux faces internes des éléments de paroi (1) et forme, avec une partie intercalaire saillant au-delà du bord des éléments de paroi (1), un profil replié de section transversale configurée en T, appliqué sur l'arête de l'élément de construction et/ou d'éclairage.

14. Elément de construction et/ou d'éclairage selon l'une des revendications 1 à 13, caractérisé par le fait que les éléments de paroi (1) sont réalisés pourvus, à la face interne, de gorges d'étanchement (6) s'étendant au moins à peu près parallèlement aux bords.

15. Elément de construction et/ou d'éclairage selon l'une des revendications 1 à 14, caractérisé par le fait qu'au moins l'un des éléments de paroi (1) est réalisé muni d'un bord en retrait par rapport à l'autre/aux autres élément(s) de paroi (1).

16. Elément de construction et/ou d'éclairage selon l'une des revendications 1 à 15, caractérisé par le fait que la garniture d'étanchement marginale est formée par une feuille (7) ondulée ou rétractible transversalement par rapport à l'étendue des éléments de paroi (1), et dont les bords sont reliés auxdits éléments de paroi (1).

17. Elément de construction et/ou d'éclairage selon l'une des revendications 1 à 16, caractérisé par le fait qu'il est prévu, à sa face externe, un dispositif d'ombrage (26) à commande thermostatique et fonctionnant grâce à une énergie engendrée par de la lumière diurne, ou bien l'ombrage peut être commandé par d'autres moyens.

18. Elément de construction et/ou d'éclairage selon l'une des revendications 1 à 16, caractérisé par le fait qu'il est prévu en tant que collecteur en vue de recueillir de l'énergie lumineuse et solaire, l'élément de paroi (1) situé à la face externe étant de réalisation transparente et étant doté, dans l'espace intermédiaire (3), d'absorbeurs à revêtement sélectif et de conduits de circulation d'un fluide.

19. Elément de construction et/ou d'éclairage selon l'une des revendications 1 à 16, caractérisé par le fait que ce dernier est placé à la face externe d'un accumulateur thermique (32) qui est exposée à la lumière diurne, et les parois accumulatrices sont munies d'un revêtement noir ou sélectif.

20. Procédé de fabrication d'un élément thermo-isolant de construction et/ou d'éclairage selon l'une des revendications 1 à 16, caractérisé par le fait que les éléments de paroi (1) sont soumis à dépression, étuvés et rendus étanches en une seule opération, par paires respectives ou en plusieurs exemplaires, après insertion des éléments de soutien (2) et d'éventuels agents sorbeurs, et après application de la garniture d'étanchement marginale en vue de former l'espace intermédiaire (3).

21. Procédé de fabrication d'un élément thermo-isolant de construction et/ou d'éclairage selon l'une des revendications 1 à 16, comprenant au moins deux éléments de paroi (1) reliés par une garniture d'étanchement marginale (4, 7, 8, 13), et formant un espace intermédiaire (3) mis sous vide et muni d'éléments de soutien (2), caractérisé par le fait que les éléments de soutien (2) sont poinçonnés au moyen d'un dispositif de poinçonnage (38), à partir d'un matériau en forme de feuilles ou de plaques délivré en mode pas à pas, au-dessus de la position finale qu'ils occupent sur l'un (1) des éléments de paroi, puis sont appliqués.

22. Dispositif pour la mise en oeuvre du procédé selon la revendication 20, caractérisé par la présence d'un dispositif de poinçonnage (38) réalisé muni de plusieurs postes coïncidant avec la cote modulaire des éléments de soutien (2) ; ainsi que d'un dispositif d'amenée du matériau à poinçonner.

**23.** Dispositif selon la revendication 22, caractérisé par le fait que des aiguilles ou des pointeaux pouvant être chargé(e)s électrostatiquement sont prévu(e)s, en vue du positionnement des éléments de soutien (2), au-dessous du dispositif de poinçonnage (38) et de l'élément de paroi (1) recevant lesdits éléments de soutien (2).

**24.** Procédé de fabrication d'un élément thermo-isolant de construction et/ou d'éclairage selon l'une des revendications 1 à 16, comprenant au moins deux éléments de paroi (1) reliés par une garniture d'étanchement marginale (4, 7, 8, 13), et formant un espace intermédiaire (3) mis sous vide et muni d'éléments de soutien (2), caractérisé par le fait que les éléments de soutien (2) sont métallisés sous vide, sur l'élément de paroi (1) prévu, d'après un masque perforé et modulairement adapté aux positions finales desdits éléments de soutien (2).

**25.** Procédé de fabrication d'un élément thermo-isolant de construction et/ou d'éclairage selon l'une des revendications 1 à 16, comprenant au moins deux éléments de paroi (1) reliés par une garniture d'étanchement marginale (4, 7, 8, 13), et formant un espace intermédiaire (3) mis sous vide et muni d'éléments de soutien (2), caractérisé par le fait que les éléments de soutien (2) sont déposés sous la forme d'une pâte durcissante ou d'un matériau fusible.

**26.** Procédé de fabrication d'un élément thermo-isolant de construction et/ou d'éclairage selon l'une des revendications 1 à 16, comprenant au moins deux éléments de paroi (1) reliés par une garniture d'étanchement marginale (4, 7, 8, 13), et formant un espace intermédiaire (3) mis sous vide et muni d'éléments de soutien (2), caractérisé par le fait que les éléments de soutien (2) sont implantés par dispersion sur l'élément de paroi (1).

**27.** Procédé de fabrication d'un élément thermo-isolant de construction et/ou d'éclairage selon l'une des revendications 1 à 16, comprenant au moins deux éléments de paroi (1) reliés par une garniture d'étanchement marginale (4, 7, 8, 13), et formant un espace intermédiaire (3) mis sous vide et muni d'éléments de soutien (2), caractérisé par le fait que les éléments de soutien (2) sont déposés, sur un élément de paroi (1), à partir d'un rouleau rotatif dont l'enveloppe périphérique est percée d'orifices coïncidant avec la cote modulaire prédéterminée.

**28.** Procédé de fabrication d'un élément thermo-isolant de construction et/ou d'éclairage selon l'une des revendications 20 et 24 à 27, comprenant au moins deux éléments de paroi (1) reliés par une garniture d'étanchement marginale (4, 7, 8, 13), et formant un espace intermédiaire (3) mis sous vide et muni d'éléments de soutien (2), caractérisé par le fait que la mise sous vide de l'espace intermédiaire (3) s'opère à travers un orifice pratiqué dans la garniture d'étanchement marginale, dans les éléments de paroi (1) ou dans le réceptacle à agents sorbeurs ; cet orifice est brasé sous vide ; et la zone de brasage n'est mise en communication avec l'environnement atmosphérique qu'après durcissement complet de la brasure.

**29.** Elément de construction et/ou d'éclairage selon l'une des revendications 1 à 16, caractérisé par le fait que les éléments de paroi (1) sont constitués par du verre.

FIG.1

FIG. 2

FIG. 3

FIG. 4

FIG. 5

FIG. 6

FIG. 7

FIG. 8

FIG. 9

FIG.10

FIG.11

FIG.12

FIG.13

FIG.14

FIG.15

FIG.16

FIG.17

FIG.18

FIG.19

FIG.20